# EUROPEAN PATENT APPLICATION

(11) **EP 4 436 202 A1**
(43) Date of publication of application: **25.09.2024**
(21) Application number: 22891313.3
(22) Date of filing: 28.02.2022
(51) Int. Cl.: H04Q 11/00

(54) **TRAFFIC PROCESSING METHOD AND APPARATUS FOR OPTICAL TRANSPORT NETWORK, AND ELECTRONIC DEVICE AND STORAGE MEDIUM**

(30) Priority: 15.11.2021 CN 202111349497
(71) Applicant: Sanechips Technology Co., Ltd., Shenzhen, Guangdong 518055 (CN)
(72) Inventor: CHEN, Sisi, Shenzhen, Guangdong 518057 (CN)
(74) Representative: Ipsilon
(86) International application number: PCT/CN2022/078508
(87) International publication number: WO 2023/082501

(57) **Abstract**

Embodiments of the present application relate the technical filed of optical communications, in particular to a traffic processing method and an apparatus for an optical transport network, an electronic device, and a storage medium. The traffic processing method includes: obtaining an acquisition mode control signal for designating a type of a payload block (PB) to be acquired; performing data acquisition on a PB of an optical channel payload unit (OPU) frame mapped and multiplexed from an optical service unit (OSU) frame according to the designated type of the PB to be acquired to obtain acquired data; performing data statistics of the designated type of the PB according to the acquired data.

## Description

### CROSS-REFERENCE TO RELATED APPLICATIONS

The present application claims the priority of Chinese Patent Application No. 202111349497.4, filed on November 15, 2021, the contents of which are incorporated herein in their entirety by reference.

### TECHNICAL FIELD

The present application relates to the field of optical communication technologies, and in particular, to a traffic processing method for an optical transport network, a traffic processing apparatus for an optical transport network, an electronic device, and a storage medium.

### BACKGROUND

An optical service unit (OSU) technology is an emerging technology in the field of bearer, and compared with an existing optical transport network (OTN) technology, the OSU supports simultaneous access of a large number of client services, so that a plurality of low-rate clients are loaded on an existing optical channel payload unit (OPU) transmission pipeline in a bearer network; for example, a single bearer device of the existing OTN may bear several tens of services, but a single bearer device of the OSU may bear several thousands of services.

In the OTN, an operator may perform data acquisition on traffic of a transmission pipeline of the OTN, and the acquired data may be used for network management, planning, diagnosis and maintenance, client charging and the like. For a bearer scenario with a large number of services, such as OSU, data acquisition is performed according to an occupied logical path or an occupied optical path bandwidth, but data of each service cannot be distinguished from the acquired data, so that a change condition of the data of each service in the OSU cannot be acquired.

### SUMMARY

An embodiment of the present application provides a traffic processing method for an optical transport network, including: obtaining an acquisition mode control signal for designating a type of a payload block (PB) to be acquired; performing data acquisition on a PB of an optical channel payload unit (OPU) frame mapped and multiplexed from an optical service unit (OSU) frame, according to the designated type of the PB to be acquired, to obtain acquired data; and performing data statistics of the designated type of the PB according to the acquired data.

An embodiment of the present application provides a traffic processing apparatus for an optical transport network, including: an obtaining module configured to obtain an acquisition mode control signal for designating a type of a PB to be acquired; an acquisition module configured to perform data acquisition on a PB of an optical channel payload unit (OPU) frame mapped and multiplexed from an optical service unit (OSU) frame, according to the designated type of the PB to be acquired, to obtain acquired data; and a statistic module configured to perform data statistics of the designated type of the PB according to the acquired data.

An embodiment of the present application provides an electronic device, including: at least one processor; and a memory communicatively connected with the at least one processor; the memory stores instructions to be executed by the at least one processor, the instructions, executed by the at least one processor, cause the at least one processor to perform the traffic processing method for the optical transport network described above.

An embodiment of the present application provides a computer-readable storage medium stored with a computer program, the computer program, executed by a processor, causes the processor to perform the traffic processing method for the optical transport network described above.

According to the traffic processing method for the optical transport network provided in the present application, in a traffic processing process of the optical transport network at a receiving end, the acquisition mode control signal for designating the type of the PB to be acquired is obtained; data acquisition is performed on the PB of the OPU frame mapped and multiplexed from the OSU frame according to the designated type of the PB to be acquired to obtain acquired data; and data statistics of the designated type of the PB is performed according to the acquired data. According to the present application, by performing data acquisition and data statistics on data of the PB, corresponding to the type of the PB to be acquired designated by the acquisition mode control signal, of the OPU frame mapped and multiplexed from the OSU frame, data statistics can be performed on the data of the designated type of the PB in the OPU frame, a purpose of independently performing data acquisition on each client service is achieved, and a technical problem that the statistic data cannot be distinguished according to the services due to a fact that the data statistics is performed according to the occupied logic path or the optical path bandwidth in the existing art is solved.

### BRIEF DESCRIPTION OF DRAWINGS

Fig. 1 is a flowchart of a traffic processing method for an optical transport network according to an embodiment of the present application.
Fig. 2 is a flowchart of a traffic processing method for an optical transport network according to an embodiment of the present application.
Fig. 3 is a flowchart of a traffic processing method for an optical transport network according to an embodiment of the present application.
Fig. 4 is a flowchart of a traffic processing method for an optical transport network according to an embodiment of the present application.
Fig. 5 is a flowchart of a traffic processing method for an optical transport network according to an embodiment of the present application.
Fig. 6 is a schematic structural diagram of a traffic processing apparatus for an optical transport network according to an embodiment of the present application.
Fig. 7 is a schematic structural diagram of an electronic device according to an embodiment of the present application.

### DETAIL DESCRIPTION OF EMBODIMENTS

In order to make purposes, technical solutions, and advantages of the present application clear, embodiments of the present application are described below with reference to the accompanying drawings. However, it should be understood by those of ordinary skill in the art that, in the embodiments of the present application, many technical details are proposed to enable readers to better understand the present application. However, the technical solutions claimed in the present application may be implemented without these technical details and based on various changes and modifications of the embodiments. The following embodiments are divided for convenience of description, but should not constitute any limitation to the specific implementation manner of the present application, and the embodiments of the present application may be combined with each other if no conflict is incurred.

The embodiments of the present application mainly aim to provide a traffic processing method for an optical transport network, a traffic processing apparatus for an optical transport network, an electronic device and a storage medium, and aim to perform data statistics on data of a PB of a designated type in an OPU frame to achieve a purpose of independently performing data acquisition on each client service.

The OSU mentioned in the embodiments of the present application is a container for bearing a service in an OTN, a length of a frame of the OSU is 192 bytes, and the frame of the OSU includes an overhead region and a payload region; the PB is a continuous region of 192 bytes in the payload region of the OPU frame. An optical service tributary unit refers to a structure composed of PBs actually occupied by the OSU in any transport period, the number of the PBs is determined according to a client signal rate and an OSU reference rate. The transport period is composed of P continuous PBs, i.e., a time duration for the OPU continuously transporting P PBs, OPUs at different rates correspond to different values of P, and P represents a maximum number of bearing opportunities provided by the transport period; the value of P is determined according to an OPU payload rate and the OSU reference rate; a tributary port number (TPN) is used to identify a connection of an end-to-end OSU link in each section layer, and the TPN is to be updated at each section layer, and the identifier of TPN is unique in each section layer.

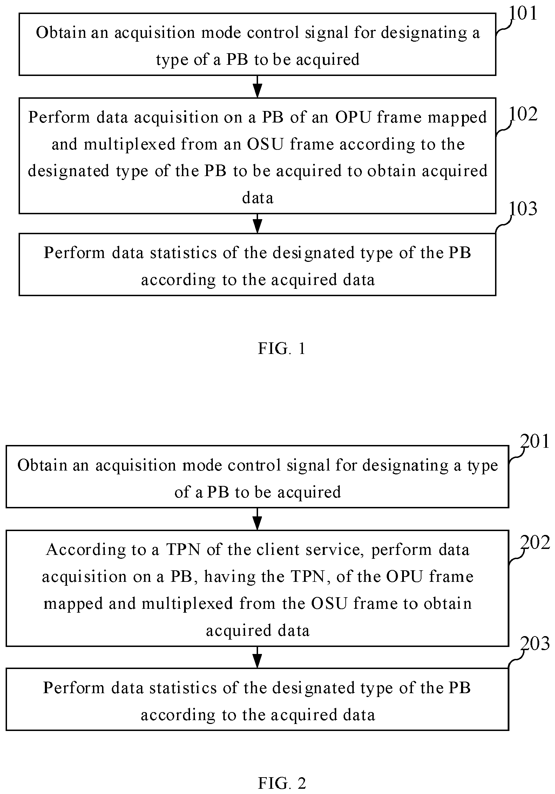

An embodiment of the present application relates to a traffic processing method for an optical transport network, applied to an OTN device based on an OSU, and as shown in Fig. 1, the method includes following operations 101 to 103.

At operation 101, obtaining an acquisition mode control signal for designating a type of a PB to be acquired.

In some implementations, the acquisition mode control signal obtained by the OTN device may be obtained from an upper-layer software of the device through a management interface, or may be obtained from other devices in the OTN through a data transceiver, the obtained acquisition mode control signal is used to designate the type of the PB during the OTN device performing data acquisition.

In some implementations, the type of the PB to be acquired designated by the acquisition mode control signal may be designated by a PB used by a client service, may be designated by a PB for loading a data frame, or may be designated by both the PB used by the client service and the PB for loading the data frame.

At operation 102, performing data acquisition on a PB of an OPU frame mapped and multiplexed from an OSU frame, according to the designated type of the PB to be acquired, to obtain acquired data.

In some implementations, after the type of the PB to be acquired is determined, P corresponding to the type of the PB to be acquired is selected from PBs of the OPU frame mapped and multiplexed from the OSU frame in the OTN device, and data acquisition is performed on the PB corresponding to the type of the PB to be acquired.

In some implementations, in response to that the type of the PB to be acquired is the PB used by the client service, all PBs used by the client service are selected from the PBs of the OPU frame mapped and multiplexed from the OSU frame in the OTN device, the PBs used by the client service include PBs used by data frames and PBs used by non-data frames.

In some implementations, in response to that the type of the PB to be acquired is the PB for loading the data frame, all PBs for loading the data frame are selected from the PBs of the OPU frame mapped and multiplexed from the OSU frame in the OTN device, the PBs for loading the data frame include the PB used by each client service.

In some implementations, in response to that the type of the PB to be acquired is the PB used by the client service and the PB for loading the data frame, the PB, for loading the data frame, used by the client service is selected from the PBs of the OPU frame mapped and multiplexed from the OSU frame in the OTN device.

At operation 103, performing data statistics of the designated type of the PB according to the acquired data.

In some implementations, after data is acquired from the PB corresponding to the type of the PB to be acquired, the data statistics is performed on the acquired data, which means that statistic multiplex and mathematical analysis (including, but not limited to, processes such as accumulation, updating, classification, combination, splitting, calculation, conversion, and the like) are performed on the acquired data. The data acquired from the PB may also include a timestamp, the data statistics may accordingly include processing the timestamp, for example, selecting the data in a specific time period according to a value of the timestamp, or combining a plurality of pieces of data with timestamps.

In some implementations, the acquisition mode control signal is further configured to indicate an acquisition mode, and the acquisition mode includes any one or any combination of followings: a total number of PBs used in a single transport period, a total number of PBs used by data frames in a single transport period, a total number of PBs used in a designated period, a total number of PBs used by data frames in a designated period, a total number of PBs used and acquired according to a single client service, a total number of PBs used by data frames and acquired according to a single client service, a total number of PBs used and acquired according to a group of clients, a total number of PBs used by data frames and acquired according to a group of clients; a total number of PBs used and acquired according to an entire OPU, a total number of PBs used by data frames and acquired according to an entire OPU, a total number of PBs used by non-data frames and acquired; the present application supports various data acquisition modes to be controlled by instructions, a total transport bandwidth and an effective bandwidth occupied by the client service may be provided, and service information of an overload rate, an idle rate and a bandwidth utilization rate may be provided.

In some implementations, after the acquisition mode control signal indicates the acquisition mode, the data statistics is to be performed further according to the acquisition mode for performing the data statistics on the data of the designated type of the PB; for example, in response to that the acquisition mode indicates the total number of PBs used in the single transport period, during the data statistics being performed, the data statistics is performed on only the data of the PBs used by the client service in the single transport period, and other modes can be analogized.

According to the embodiment of the present application, in a traffic processing process of the optical transport network at a receiving end, the acquisition mode control signal for designating the type of the PB to be acquired is obtained; the data acquisition is performed on the PB of the OPU frame mapped and multiplexed from the OSU frame according to the designated type of the PB to be acquired to obtain acquired data; and the data statistics of the designated type of the PB is performed according to the acquired data. According to the present application, by performing data acquisition and data statistics on the data of the PB corresponding to the type of the PB to be acquired, which is designated by the acquisition mode control signal, of the OPU frame mapped and multiplexed from the OSU frame, the data statistics can be performed on the data of the designated type of the PB in the OPU frame, a purpose of independently performing data acquisition on each client service is achieved, and a technical problem that statistic data cannot be distinguished according to the services due to a fact that the data statistics is performed according to the occupied logic path or the optical path bandwidth in the existing art is solved.

An embodiment of the present application relates to a traffic processing method for an optical transport network, applied to an OTN device based on an OSU, and as shown in Fig. 2, the method includes following operations 201 to 203.

At operation 201, obtaining an acquisition mode control signal for designating a type of a PB to be acquired.

In some implementations, the operation 201 is substantially the same as the operation 101 described above, and thus is not repeated herein.

At operation 202, according to a tributary port number (TPN) of the client service, performing data acquisition on a PB, having the TPN, of the OPU frame mapped and multiplexed from the OSU frame, to obtain acquired data.

In some implementations, in the OTN, each client service has an unique TPN, and during the OUS frame being mapped and multiplexed to the PB of the OPU frame, the OPU frame may select C PBs according to expectations of the client service as PBs of the client service, and adds the TPN of the client service in the selected PBs, so as to distinguish a function of each PB in the ONU frame.

In some implementations, in response to that the designated type of the PB to be acquired includes the PB used by the client service, according to the TPN of the client service, the PB carrying the TPN is selected from the PBs of the OPU frame mapped and multiplexed from the OSU frame, and the data acquisition is performed on the selected PB carrying the TPN.

At operation 203, performing data statistics of the designated type of the PB according to the acquired data.

In some implementations, the operation 203 is substantially the same as the operation 103 described above, and thus is not repeated herein.

According to the embodiment of the present application, each PB in the OPU frame can be further distinguished by the TPN of the client service, so that, data processing can be performed on the OSU frame according to the client service, the accuracy of distinguishing or identifying the data of each client service is improved in the present application; moreover, in an end-to-end link of the OSU frame, the TPN can be updated segment by segment for different service layers, therefore data acquisition and processing on the traffic can be performed segment by segment in the entire end-to-end transport network.

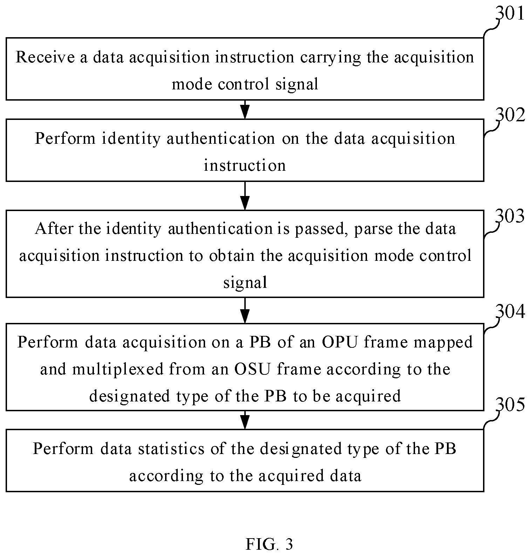

An embodiment of the present application relates to a traffic processing method for an optical transport network, applied to an OTN device based on an OSU, and as shown in Fig. 3, the method includes following operations 301 to 303.

At operation 301, receiving a data acquisition instruction carrying an acquisition mode control signal.

In some implementations, the acquisition mode control signal received by the OTN device may be sent by an upper-layer software, or may be sent by other devices in the OTN, the received data acquisition instruction carries the acquisition mode control signal. After receiving the data acquisition instruction, the OTN device parses the data acquisition instruction, and performs parse processing on the acquisition mode control signal from the data acquisition instruction, so as to perform data processing according to the acquisition mode control signal.

At operation 302, performing identity authentication on the data acquisition instruction.

In some implementations, after receiving the data acquisition instruction, the identity authentication may be performed on the data acquisition instruction, and only after the data acquisition instruction gets through or passes the identity authentication, the data acquisition is to be performed according to the data acquisition instruction; the identity authentication performed on the data acquisition instruction includes to authenticate any one or any combination of followings: a TPN, an access password, an access identity or an identity password of a client service, and information such as the TPN, the access password, the access identity and the identity password of the client service may be negotiated in advance by a communication.

At operation 303, after the data acquisition instruction passes the identity authentication, parsing the data acquisition instruction to obtain the acquisition mode control signal, the acquisition mode control signal being configured to designate a type of a PB to be acquired.

In some implementations, as long as the TPN, the access password, the access identity, or the identity password of the client service carried in the data acquisition instruction is the same as that locally stored by the OTN device, the data acquisition instruction is considered passing the identity authentication, and after the data acquisition instruction passes the identity authentication, the data acquisition instruction is parsed to obtain the acquisition mode control signal, and data acquisition and processing are to be performed according to the acquisition mode control signal.

At operation 304, performing data acquisition on a PB of an OPU frame mapped and multiplexed from an OSU frame according to the designated type of the PB to be acquired to obtain acquired data.

In some implementations, the operation 304 is substantially the same as the operation 102 described above, and thus is not repeated herein.

At operation 305, performing data statistics of the designated type of the PB according to the acquired data.

In some implementations, the operation 305 is substantially the same as the operation 103 described above, and thus is not repeated herein.

According to the embodiment of the present application, after receiving the data acquisition instruction, the identity authentication is performed on the data acquisition instruction, and only after the data acquisition instruction passes the identity authentication, data processing for the client service is to be performed according to instruction information carried in the data acquisition instruction, and thus the privacy of the data of the client service in the OSU can be ensured.

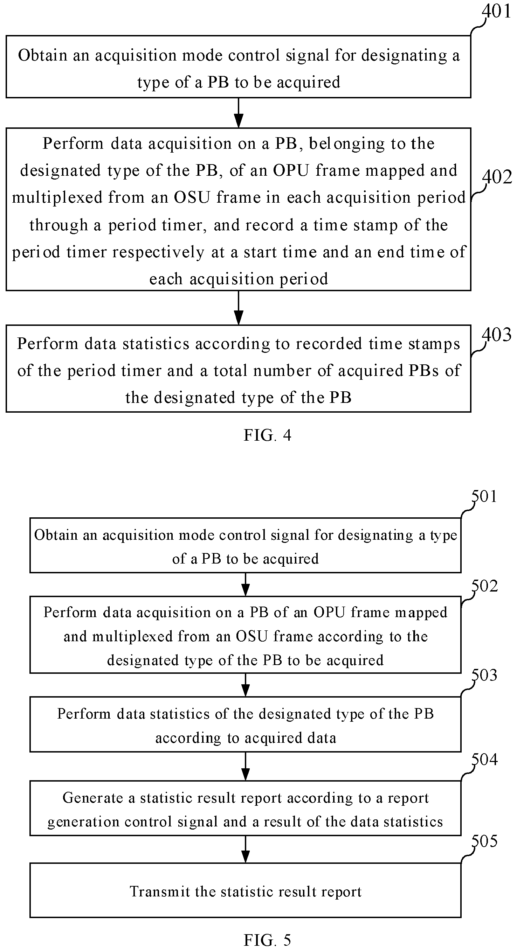

An embodiment of the present application relates to a traffic processing method for an optical transport network, applied to an OTN device based on an OSU, and as shown in Fig. 4, the method includes following operations 401 to 403.

At operation 401, obtaining an acquisition mode control signal for designating a type of a PB to be acquired.

In some implementations, the operation 401 is substantially the same as the operation 101 described above, and thus is not repeated herein.

At operation 402, performing data acquisition on a PB, belonging to the designated type of the PB, of an OPU frame mapped and multiplexed from an OSU frame in each acquisition period through a period timer, and recording a time stamp of the period timer at a start time and an end time of each acquisition period respectively.

In some implementations, the period timer is configured in the OTN device, during any acquisition period specified by the period timer, data acquisition is performed on the PB , belonging to the designated type of the PB, of an OPU frame mapped and multiplexed from an OSU frame, and after the data of the PB in each acquisition period is acquired, time stamps of the period at the start time and the end time of the period respectively and the period are recorded, so that the OTN device can distinguish or identify the time of acquisition in each acquisition period.

At operation 403, performing data statistics according to the recorded time stamps of the period timer and a total number of the acquired PBs of the designated type of the PB.

In some implementations, according to the time stamps of each acquisition period in the period timer, the data of the PB, corresponding to the designated type of the PB, in any designated acquisition period is selected and subjected to the data statistics.

According to the embodiment of the present application, the OTN device can automatically acquire the data of the PB corresponding to the designated type of the PB according to a preset acquisition period to obtain acquired data, and if a user has expectations, the data of the PB in the acquisition period corresponding to the expectations of the user is extracted from the acquired data; the number of PBs used by the client service is counted in a hardware processing layer in which an OSU frame is mapped and multiplexed to an OPU frame, a calculation is performed in real time, the precision of the calculation is relatively high, a dynamic change of the traffic of the client service can be accurately reported, data acquisition and processing of the traffic for different lengths of time durations can be performed; and the flexibility of the data acquisition in the present application is improved.

An embodiment of the present application relates to a traffic processing method for an optical transport network, applied to an OTN device based on an OSU, and as shown in Fig. 5, the method includes following operations 501 to 505.

At operation 501, obtaining an acquisition mode control signal for designating a type of a PB to be acquired.

In some implementations, the operation 501 is substantially the same as the operation 101 described above, and thus is not repeated herein.

At operation 502, performing data acquisition on a PB of an OPU frame mapped and multiplexed from an OSU frame according to the designated type of the PB to be acquired to obtain acquired data.

In some implementations, the operation 502 is substantially the same as the operation 102 described above, and thus is not repeated herein.

At operation 503, performing data statistics of the designated type of the PB according to the acquired data.

In some implementations, the operation 503 is substantially the same as the operation 103 described above, and thus is not repeated herein.

At operation 504, generating a statistic result report according to a report generation control signal and a result of the data statistics.

In some implementations, the report generation control signal is acquired together with the acquisition mode control signal, and is configured to designate a type and a style of a statistics result report to be generated; after the result of the data statistics is acquired, the statistic result report is generated according to the type and the style of the report indicated by the report generation control signal and report data indicated by the result of the data statistics; for example, a report of a total transport bandwidth and/or a report of an effective bandwidth occupied by the client service, including a one-hour report, a twelve-hour report, a twenty-four-hour report, a one-week report, and the like, can be generated according to a time range. For example, a report of busiest period and/or a report of most idle period of the client service may be generated.

At operation 505, transmitting the statistic result report.

In some implementations, after the statistic result report is generated, the statistic result report may be displayed on a human-computer interaction interface for a user viewing, or may be sent to other devices in the OTN or sent to an upper-layer software of the OTN device.

In some implementations, before transmitting the statistic result report, the statistic result report may be packaged according to information such as a serial number of the client service, a result of identity authentication, instruction information, the acquired data, a start timestamp, an end timestamp, intermediate data of data analysis, state information of the client service, error indication, package verification or the like, and the packaged statistic result report is to be transmitted; the packaged statistic result report may also be encrypted, so as to improve the security of the data of the client service in the OSU.

According to the embodiment of the present application, the statistic result report is generated according to the type and the style of the report indicated by the report generation control signal and the report data indicated by the result of the data statistics, so as to facilitate the data of each client service in the OSU to be viewed.

The division of operations in the above method is only for a purpose of clear description, for implementing the method, the operations may be combined into one operation or any operation may be split into several operations, so long as the logical relationship is remained, which are within the protection scope of the present application; unimportant modifications or designs added or introduced to the algorithm or process with the core design of the algorithm and process being not changed are within the protection scope of the present application.

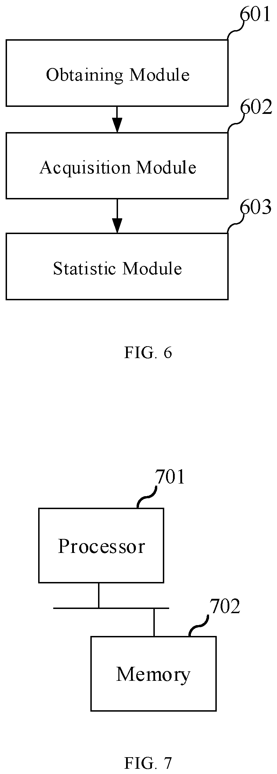

An embodiment of the present application relates to a traffic processing apparatus for an optical transport network, and as shown in Fig. 6 illustrating a schematic structural diagram of a traffic processing apparatus for an optical transport network according to an embodiment of the present application, the apparatus includes: an obtaining module 601, an acquisition module 602, and a statistic module 603.

The obtaining module 601 is configured to obtain an acquisition mode control signal for designating a type of a PB to be acquired; the acquisition module 602 is configured to perform data acquisition on a PB of an OPU frame mapped and multiplexed from an OSU frame according to the designated type of the PB to be acquired; and the statistic module 603 is configured to perform data statistics of the designated type of the PB according to the acquired data.

In some implementations, the obtaining module 601 may be formed by a management interface and a data transceiver; the acquisition mode control signal obtained by the obtaining module 601 may be obtained from an upper-layer software of the device through the management interface, or may be obtained from other devices in the OTN through the data transceiver, the obtained acquisition mode control signal is configured to designate the type of the PB for the OTN device performing the data acquisition; the present application provides the data transceiver to support a communication with other devices at a hardware layer, and support instruction interaction and data statistics; provides the management interface to support a communication with an upper-layer software, support instruction interaction and data statistics, and support an access to a unified network management platform of an operator, and the flexibility of the present application is improved.

It should be understood that the present embodiment is a system embodiment corresponding to the above embodiments of the method, and the present embodiment can be implemented in cooperation with the above embodiments of the method. The relevant technical details mentioned in the above embodiments are still valid in the present embodiment, and are not repeated herein in order to reduce repetitions. Accordingly, the related technical details mentioned in the present embodiment may be applied to the above embodiments.

It should be noted that, each module related in the present embodiment is a logic module, and in practical applications, any logic unit may be one physical component or a part of one physical component, or may be implemented by a combination of multiple physical components. In addition, in order to highlight the innovative part of the present application, some units less closely related to solving the technical problem proposed by the present application are not introduced in the present embodiment, but it does not indicate that there is not any other unit in the present embodiment.

An embodiment of the present application relates to an electronic device, and as shown in Fig. 7, the electronic device includes: at least one processor 701; and a memory 702 communicatively connected with the at least one processor 701; the memory 702 stores instructions to be executed by the at least one processor 701, the instructions, executed by the at least one processor 701, cause the at least one processor 701 to perform the traffic processing method for the optical transport network described above.

The memory and the processor are connected through a bus, the bus may include any number of interconnected buses and bridges, and connects various circuits of one or more processors and the memory together. The bus may further connect together various circuits of peripherals, voltage regulators, power management circuits, and the like, which are well known in the art, and thus are not repeated here. A bus interface provides an interface between the bus and a transceiver. The transceiver may be one element or a plurality of elements, such as a plurality of receivers and transmitters, providing a means for communicating with various other apparatuses over a transmission medium. The data processed by the processor is transmitted over a wireless medium through an antenna, and further, the antenna receives data and transmits the data to the processor.

The processor manages the bus, performs general processing, and may further provide various functions including timing, peripheral interfaces, voltage regulation, power management, and other control functions. The memory may be configured to store data used by the processor during performing the operations.

An embodiment of the present application further provides a computer-readable storage medium having a computer program stored thereon, the computer program, executed by a processor, causes the processor to implement the traffic processing method for the optical transport network described above.

It should be understood, by those skilled in the art, that all or part of the operations in the method described above may be implemented by a program instructing related hardware, the program is stored in a storage medium and includes several instructions for causing a device (which may be a single-chip computer, a chip, or the like) or a processor to execute all or part of operations of the method provided in any embodiment of the present application. The aforementioned storage medium includes: a U-disk, a read-only memory (ROM), a random access memory (RAM), a removable hard disk, a magnetic disk, an optical disk, or various medium capable of storing program codes.

It should be understood by those of ordinary skill in the art that each above embodiment or implementation is a specific embodiment or implementation for realizing the present application, and various changes may be made thereto in form and detail in practical applications without departing from the spirit and scope of the present application.

## Claims

1. A traffic processing method for an optical transport network, comprising:
obtaining an acquisition mode control signal for designating a type of a payload block, PB, to be acquired;
performing data acquisition on a PB of an optical channel payload unit, OPU, frame mapped and multiplexed from an optical service unit, OSU, frame according to the designated type of the PB to be acquired to obtain acquired data;
performing data statistics of the designated type of the PB according to the acquired data.

2. The method of claim 1, wherein the designated type of the PB to be acquired comprises at least one of:
a PB used by a client service or a PB for loading a data frame.

3. The method of claim 2, wherein, in response to that the designated type of the PB comprises the PB used by the client service, the performing data acquisition on a PB of an OPU frame mapped and multiplexed from an OSU frame according to the designated type of the PB to be acquired comprises:
according to a tributary port number, TPN, of the client service, performing data acquisition on the PB, having the TPN, of the OPU frame mapped and multiplexed from the OSU frame.

4. The method of claim 2, wherein the acquisition mode control signal is further configured to indicate an acquisition mode;
the performing data statistics of the designated type of the PB according to the acquired data comprises:
performing the data statistics of the designated type of the PB according to the acquired data and the acquisition mode;
wherein the acquisition mode comprises any one or any combination of followings:
a total number of PBs used in a single transport period, a total number of PBs used by data frames in a single transport period, a total number of PBs used in a designated period, a total number of PBs used by data frames in a designated period, a total number of PBs used and acquired according to a single client service, a total number of PBs used by data frames and acquired according to a single client service, a total number of PBs used and acquired according to a group of clients, a total number of PBs used by data frames and acquired according to a group of clients; a total number of PBs used and acquired according to an entire OPU, a total number of PBs used by data frames and acquired according to an entire OPU, a total number of PBs used by non-data frames and acquired.

5. The method of claim 1, further comprising:
before the obtaining an acquisition mode control signal, receiving a data acquisition instruction carrying the acquisition mode control signal;
performing identity authentication on the data acquisition instruction;
the obtaining an acquisition mode control signal comprises:
after the data acquisition instruction passes the identity authentication, parsing the data acquisition instruction to obtain the acquisition mode control signal.

6. The method of claim 5, wherein the identity authentication comprises any one or any combination of followings: a tributary port number, TPN, an access password, an access identity and an identity password of a client service.

7. The method of any one of claims 1 to 6, wherein the performing data acquisition on a PB of an OPU frame mapped and multiplexed from an OSU frame according to the designated type of the PB to be acquired comprises:
performing the data acquisition on the PB, belonging to the designated type of the PB, of the OPU frame mapped and multiplexed from the OSU frame in each acquisition period through a period timer, and recording a time stamp of the period timer at a start time and an end time of each acquisition period respectively;
the performing data statistics of the designated type of the PB according to the acquired data comprises:
performing the data statistics according to recorded time stamps of the period timer and a total number of acquired PBs of the designated type of the PB.

8. The method of any one of claims 1 to 7, further comprising:
after the performing data statistics of the designated type of the PB according to the acquired data, generating a statistic result report according to a report generation control signal and a result of the data statistics; and
transmitting the statistic result report;
wherein the report generation control signal is generated according to a received instruction, and is configured to indicate a report form.

9. The method of claim 8, further comprising:
after the generating a statistic result report and before the transmitting the statistic result report, packaging the statistic result report into a data structure comprising information of a serial number of a client service, a result of identity authentication, instruction information, the acquired data, a start timestamp, an end timestamp, intermediate data of data analysis, state information of a client service, error indication and package verification;
the transmitting the statistic result report comprises:
transmitting the statistic result report packaged in the data structure.

10. A traffic processing apparatus for an optical transport network, comprising:
an obtaining module configured to obtain an acquisition mode control signal for designating a type of a PB to be acquired;
an acquisition module configured to perform data acquisition on a PB of an OPU frame mapped and multiplexed from an OSU frame according to the designated type of the PB to be acquired to obtain acquired data;
a statistic module configured to perform data statistics of the designated type of the PB according to the acquired data.

11. An electronic device, comprising:
at least one processor; and
a memory communicatively connected to the at least one processor, wherein
the memory stores instructions to be executed by the at least one processor, the instructions, executed by the at least one processor, cause the at least one processor to perform the traffic processing method for the optical transport network according to any one of claims 1 to 9.

12. A computer-readable storage medium stored with a computer program, the computer program, executed by a processor, causes the processor to perform the traffic processing method for the optical transport network according to any one of claims 1 to 9.
